# FASCICULE DE BREVET EUROPEEN

(11) **EP 1 772 443 B1**
(45) Date de publication et mention de la délivrance du brevet: **22.05.2013**
(21) Numéro de dépôt: 06121754.3
(22) Date de dépôt: 04.10.2006
(51) Int. Cl.: C04B 41/90, C22C 49/11, C22C 49/14, C23C 2/38

(54) **Procede d'enduction metallique de fibres par voie liquide**
Verfahren zur Metallbeschichtung von Fasern auf flüssigem Wege
Process for the metallic coating of fibres by liquid means

(30) Priorité: 05.10.2005 FR 0553008
(43) Date de publication de la demande: 11.04.2007
(73) Titulaire: SNECMA, 75015 Paris (FR); CNRS, 75794 Paris Cedex 16 (FR)
(72) Inventeur: Franchet, Jean-Michel, Patrick, Maurice, 75018, PARIS (FR); Fromentin, Jean-François, 77240, CESSON LA FORET (FR); Quenisset, Jean-Michel, 33600, PESSAC (FR); Duda Carine, 31000, TOULOUSE (FR); Arvieu, Corinne, 33600, PESSAC (FR); Frayssines, Pierre, Eric, 38600, FONTAINE (FR)
(74) Mandataire: David, Daniel

(56) Documents cités:
- EP-A- 0 423 996
- DUDA C ET AL: "Microstructural characterization of liquid route processed Ti 6242 coating of SCS-6 filaments" COMPOSITES PART A: APPLIED SCIENCE AND MANUFACTURING, ELSEVIER SCIENCE PUBLISHERS B.V., AMSTERDAM, NL, vol. 35, no. 5, mai 2004 (2004-05), pages 511-517, XP004499220 ISSN: 1359-835X

## Description

L'invention concerne un procédé d'enduction métallique de fibres par voie liquide.

Dans le domaine de l'aéronautique, notamment, un objectif constant est l'optimisation de la résistance des pièces pour une masse et un encombrement minimaux. C'est ainsi que certaines pièces peuvent désormais comporter un insert en matériau composite à matrice métallique. Un tel matériau composite comporte une matrice d'alliage métallique, par exemple d'alliage de titane Ti, dans laquelle s'étendent des fibres, par exemple des fibres céramiques de carbure de silicium SiC. De telles fibres présentent une résistance en traction bien supérieure à celle du titane (typiquement, 4000 MPa contre 1000 MPa) et une rigidité typiquement trois fois plus élevée. Ce sont donc les fibres qui reprennent les efforts, la matrice d'alliage métallique assurant le transfert de charges entre les fibres, une fonction de liant avec le reste de la pièce, ainsi qu'une fonction de protection et de séparation des fibres, qui ne doivent pas entrer en contact les unes avec les autres. En outre, les fibres céramiques sont résistantes, mais fragiles et doivent nécessairement être protégées par du métal.

Ces matériaux composites peuvent être utilisés dans la fabrication de disques, d'arbres, de corps de vérins, de carters, d'entretoises, comme renforts de pièces monolithiques telles des aubes, etc. Ils peuvent également trouver application dans d'autres domaines où un champ de forces volumiques s'applique à une pièce, par exemple une enveloppe de pression telle un canon ou un réservoir de fluide sous pression.

Afin d'obtenir un tel insert de matériau composite, on forme préalablement des fils dits "fils enduits", comprenant une fibre de céramique enduite de métal. Le revêtement de métal donne au fil une plus grande raideur mais une meilleure ténacité, utile pour sa manipulation. De préférence, un fil très fin de carbone ou de tungstène constitue le centre de la fibre, le long de son axe, ce fil de carbone étant enrobé de carbure de silicium, tandis qu'une fine couche de carbone ou pyrocarbone revêt le carbure de silicium et se trouve donc interposée entre la fibre et le métal, pour assurer une fonction de barrière de diffusion, de protection de la fibre contre les effets d'entaille et de tampon lors de la relaxation thermique différentielle qui intervient au moment du refroidissement du métal liquide déposé sur la fibre.

La fabrication des fils de matériau composite, ou fils enduits, peut être effectuée de diverses manières, par exemple par dépôt de métal sur la fibre en phase vapeur sous un champ électrique, par électrophorèse à partir de poudre métallique ou encore par enduction des fibres au trempé dans un bain de métal liquide. Un tel procédé d'enduction de fibres, au trempé, dans un métal liquide, est présenté dans le brevet EP 0 931 846, au nom de la Demanderesse. La fabrication des fils selon ce procédé est rapide. On obtient ainsi des fils de matériau composite, ou fils enduits, qui servent de base à la fabrication de l'insert de matériau composite qui sera inclus dans la pièce.

Dans le procédé du brevet EP 0 931 846, le métal liquide est maintenu en lévitation dans un creuset adapté, sans contact avec les parois de ce dernier, à une température appropriée ; la fibre de céramique, maintenue tendue par des moyens de préemption, est tiré au travers du bain de métal. Ce procédé est mis en oeuvre à grande vitesse, ce qui permet, d'une part, de réduire le temps de passage de la fibre de céramique dans le bain et donc de limiter son interaction avec le métal liquide, ce qui réduit sa dégradation, d'autre part, d'obtenir rapidement de grandes quantités de fil enduit, de manière industrielle.

Typiquement, la fibre de céramique est une fibre de carbure de silicium d'environ 100 à 150 µm de diamètre, formé par dépôt chimique en phase vapeur de carbure de silicium sur une âme en carbone ou tungstène de diamètre environ égal à 15 à 40 µm et protégée par un revêtement externe de carbone ou pyrocarbone, d'environ 3 µm d'épaisseur. Ce revêtement externe a pour fonction de protéger la fibre de carbure de silicium contre d'éventuelles agressions chimiques et contre la propagation de micro-défauts ; ce revêtement sert donc de barrière de diffusion entre la fibre de céramique et l'alliage métallique, chimiquement très réactif, et sert également de protection contre la propagation des défauts.

Le problème se pose du mouillage du revêtement de carbone par l'alliage métallique, c'est-à-dire de la capacité de l'alliage à convenablement s'étaler sur la surface du revêtement pour former des liaisons avec lui. La faculté de mouillage diminue avec la vitesse de défilement de la fibre dans le bain de métal, alors même que l'on souhaite que cette vitesse soit la plus élevée possible. L'enduction de la fibre par l'alliage métallique n'est possible, dans l'exemple considéré d'une fibre de carbure de silicium revêtue de carbone puis enduite d'un alliage de titane, que grâce à la formation de carbure de titane TiC à l'interface entre la fibre et le métal liquide. Cette formation n'est pas toujours possible à grande vitesse de défilement.

L'invention vise à pallier ce problème.

A cet effet, l'invention concerne un procédé d'enduction métallique de fibres par voie liquide, dans lequel une fibre, revêtue d'un matériau formant barrière de diffusion avec le métal, est tirée au travers d'un bain de métal liquide pour être enduite par ce dernier, caractérisé par le fait que, préalablement au passage de la fibre dans le bain, la fibre est revêtue d'un composé mouillable par le métal.

Grâce au procédé de l'invention, l'enduction de la fibre par le métal est facilitée par la présence du composé formant une interface mouillable par le métal.

De préférence, l'enduction de la fibre par le métal impliquant la formation d'un composé intermédiaire entre le matériau formant barrière et le métal, la fibre est préalablement revêtue du composé intermédiaire.

De préférence encore, la fibre est une fibre céramique.

Avantageusement dans ce cas, la fibre est une fibre de carbure de silicium, revêtue d'une couche de pyrocarbone ou carbone formant barrière, et le métal est un alliage de titane.

Selon une forme de réalisation, le composé mouillable par le titane est le carbure de titane.

Selon une autre forme de réalisation, le composé mouillable par le titane est le di-borure de titane.

Selon une forme de réalisation particulière, la fibre est revêtue de carbure de titane par dépôt chimique réactif dynamique en phase vapeur.

De préférence dans ce cas, le dépôt chimique réactif dynamique en phase vapeur est mis en oeuvre grâce à un précurseur de tétrachlorure de titane dans un gaz vecteur d'hydrogène.

Selon une forme de réalisation, pour la formation d'un revêtement de carbure de titane d'une épaisseur comprise entre 50 et 300 nm, de préférence environ 100 nm, le dépôt est mis en oeuvre avec les paramètres suivants :
- la température de la fibre est comprise entre 1080K et 1650K, de préférence entre 1480K et 1530K ;
- le rapport entre la concentration en hydrogène et la concentration en tétrachlorure de titane est compris entre 14,2 et 59,6 et
- la vitesse de défilement de la fibre est comprise entre 1 m/min et 3 m/min.

Selon une forme de réalisation, comprenant une étape supplémentaire de revêtement par un second composé mouillage avant l'enduction de la fibre par le métal.

Avantageusement dans ce cas, le second composé est l'étain.

L'invention sera mieux comprise à l'aide de la description suivante de la forme de réalisation préférée du procédé de l'invention, en référence aux planches annexées, sur lesquelles :
- la figure 1 représente une vue schématique du dispositif de revêtement de la fibre par un composé mouillable par le métal et
- la figure 2 représente une vue en coupe schématique partielle d'une portion de surface d'une fibre enduite d'un composé mouillable.

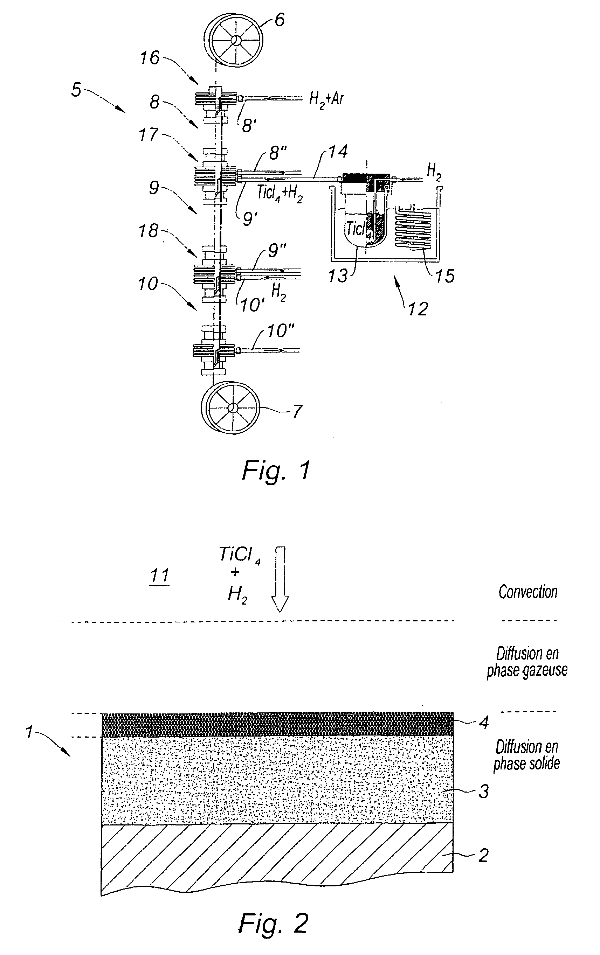

L'invention est décrite en relation avec la formation d'un fil enduit comportant une fibre de céramique de carbure de silicium, enrobée d'une gaine d'un alliage de titane. En référence à la figure 2, la fibre de céramique 1 comporte une couche 2 de carbure de silicium, formant le corps de la fibre, d'environ 100 à 150 µm de diamètre, formé par dépôt chimique en phase vapeur de carbure de silicium sur une âme en carbone d'environ 35 à 40 µm de diamètre. La fibre est recouverte d'un revêtement externe 3 de carbone ou pyrocarbone, d'environ 3 µm d'épaisseur. Ce revêtement externe a pour fonction de protéger la fibre de carbure de silicium contre d'éventuelles agressions chimiques et contre la propagation de micro-défauts ; ce revêtement sert donc de barrière de diffusion entre la fibre de céramique et l'alliage métallique, chimiquement très réactif, et sert également de protection contre la propagation des défauts.

On revêt cette fibre 1 d'un composé 4 mouillable par l'alliage de titane dont la fibre 1 sera enrobée pour former le fil enduit. A cet effet, on utilise un dispositif 5 de revêtement, représenté sur la figure 1, qui sera décrit plus loin.

Le choix de ce composé 4 est fait en fonction des exigences physico-chimiques, mécaniques et technologiques auxquelles est soumis l'homme du métier pour ce revêtement, destiné à être mis en contact avec l'alliage de titane liquide, à haute température, qui formera la gaine de métal du fil enduit, enrobant la fibre céramique. Certaines des exigences requises sont notamment :
- la capacité de mouillage par le titane ;
- la préservation des performances mécaniques de la fibre céramique et
- un faible coût de mise en oeuvre de manière continue.

Pour répondre à ces exigences, et dans le cadre de la formation d'un fil enduit tel qu'ici décrit, on forme un revêtement de carbure de titane ; l'épaisseur de ce revêtement peut par exemple être de 100 nanomètres. Ce composé est le constituant majoritaire de l'interphase entre la fibre et le métal, qui se forme dans le cadre d'un procédé d'enduction de titane sur une fibre de céramique avec un revêtement de carbone de l'art antérieur. En effet, dans un tel procédé, lorsque la fibre passe dans le bain de titane, ce dernier forme, avec le carbone situé en surface de la fibre, une phase de carbure de titane, à l'interface entre la couche de carbone et la couche de titane. C'est la cinétique de formation de cette phase qui est limitante quant à la mouillabilité de la fibre. La fibre n'est pas suffisamment mouillable par l'alliage de titane si, eu égard à sa vitesse de défilement dans le bain de métal, le carbure de titane n'a pas le temps de se former, du fait d'une limitation du transfert de carbone dans le métal. En prévoyant un revêtement de carbure de titane, on anticipe en quelque sorte ce phénomène, ce qui autorise par la suite une enduction facile de la fibre par l'alliage de titane, le carbure de titane étant très mouillable par le titane. Plus précisément, au lieu d'une interaction carbone / titane liquide, c'est une interaction carbure de titane / titane liquide qui se produit lors de l'enduction dans le bain de titane liquide, pour laquelle il existe des équilibres chimiques, alors que le carbone ne peut être en équilibre avec le titane. De nouveau, le carbure de titane est le composé qui permet au carbone d'être revêtu par le titane, ce dernier ne mouillant le carbone que grâce à la formation du carbure de titane.

Ainsi, grâce au revêtement de la fibre par un composé mouillant 4 qu'est ici le carbure de titane, l'enduction subséquente de la fibre par le titane est favorisée, ce qui autorise qu'elle soit faite à grande vitesse, la fibre revêtue de carbure de titane étant très mouillable par le titane.

On choisit ici un procédé de revêtement de la fibre par du carbure de titane par dépôt chimique réactif dynamique en phase vapeur (dépôt standardisé sous l'acronyme de dépôt RCVD, qui signifie Reactive Chemical Vapor Deposition en anglais). Un tel dépôt RCVD consiste à déposer une phase sur un substrat par réaction chimique entre un précurseur gazeux et le substrat solide, ici le carbone, maintenu à haute température. Contrairement au dépôt dynamique en phase vapeur classique, un des éléments nécessaires à la formation du dépôt est contenu dans le substrat, d'où la qualification de "réactif" pour ce dépôt. La phase vapeur est constituée d'un précurseur de titane, ici du tétrachlorure de titane TiCl₄, et d'un gaz vecteur, ici l'hydrogène.

En référence à la figure 2, lorsque le précurseur se trouve à proximité de la fibre 1 chauffée, il se décompose et le titane adsorbé à la surface réagit avec le carbone pour former le carbure de titane 4. Au fur et à mesure que cette couche 4 de carbure de titane se forme, le carbone doit diffuser au travers de cette couche pour rencontrer la phase gazeuse riche en titane, si bien que la vitesse de formation de cette couche diminue avec le temps.

La phase gazeuse 11 est amenée à proximité de la fibre 1 par convection, une zone de diffusion en phase gazeuse se formant à proximité de la surface de la fibre 1. Au niveau de cette surface, il s'opère une diffusion en phase solide du carbone pour former le carbure de titane.

L'équation globale de la réaction est :

TiCl₄ + 2 H₂ + C → TiC + 4 HCl

La vitesse de dépôt par un tel procédé est élevée (de 10³ à 10⁴ Å/min). Par ailleurs, l'épaisseur, la stoechiométrie, la morphologie et la structure cristalline du dépôt peuvent facilement être contrôlées. Le dépôt est d'une grande pureté, très homogène et adhère bien au substrat. Par ailleurs, son caractère dynamique autorise son intégration à une chaîne de production industrielle.

On décrit maintenant le dispositif 5 de revêtement représenté sur la figure 1.

Ce dispositif 5 comporte une première bobine émettrice 6, couplée à un frein mécanique pour maintenir une tension constante dans la fibre 1, et une deuxième bobine réceptrice 7. La fibre 1 est amenée à défiler entre la bobine émettrice 6 et la bobine réceptrice 7. Lors de ce défilement, depuis la bobine émettrice 6 vers la bobine réceptrice 7, la fibre 1 traverse successivement trois cellules : une première cellule 8 de nettoyage de la fibre, une deuxième cellule 9 de revêtement par le composé mouillable et une troisième cellule 10 de refroidissement.

Chaque cellule 8, 9, 10 comporte une arrivée 8', 9', 10', respectivement, et une sortie 8", 9", 10", respectivement, de gaz, qui est nécessaire au fonctionnement de la cellule 8, 9, 10.

La cellule de nettoyage 8 est alimentée par un mélange gazeux d'hydrogène H₂ et d'argon Ar. La surface externe de la fibre 1, à savoir la surface externe du revêtement 3 de pyrocarbone, qui défile dans cette cellule 8, est purifiée par ce mélange gazeux. Les débits d'hydrogène et d'argon sont contrôlés par des débitmètres à flotteurs.

La cellule de revêtement 9, qui forme le réacteur de dépôt, est alimentée en phase gazeuse, comportant le précurseur et le gaz vecteur, par un bulleur 12. Le bulleur 12 comporte une enceinte 13 contenant un mélange liquide de tétrachlorure de titane TiCl₄, qui forme le précurseur, dans laquelle est plongé un tube 14 alimenté en hydrogène gazeux H₂, formant le gaz vecteur, qui permet la formation de la phase gazeuse introduite dans la cellule de revêtement 9. Un tube 14 ressort de l'enceinte 13 avec la phase gazeuse de tétrachlorure de titane et d'hydrogène, qui est acheminée vers la cellule de revêtement 9. Le bulleur 12 est maintenu à une température contrôlée, grâce à des résistances 15 immergées dans un bain dans lequel est plongé l'enceinte 13 contenant le précurseur. La concentration de la phase gazeuse en précurseur dépend directement du débit d'hydrogène dans le bulleur et de la température de consigne de ce dernier. Compte tenu des faibles débits d'hydrogène ici utilisés, la pression partielle de tétrachlorure de titane dans le bulleur est considérée égale à la pression de vapeur saturante à la température de consigne. A titre d'exemple, le rapport R = [H₂] / [TiCl₄] est égal à 59,6 et 14,2 à 25°C et 60°C, respectivement.

Pour faciliter le nettoyage de la fibre 1 et obtenir un bon dépôt de carbure de titane, la fibre 1 est chauffée par effet Joule dans les deux premières cellules, de nettoyage 8 et de revêtement 9. A cet effet, des électrodes 16, 17, 18 sont prévues aux extrémités de ces cellules 8, 9, contenant un mélange de mercure Hg et d'indium In et alimentées en courant électrique. La température de la fibre 1 est par exemple mesurée par un pyromètre optique.

La troisième cellule 10 comporte une atmosphère réductrice d'hydrogène H₂, qui permet le refroidissement du filament et évite, en grande partie, l'oxydation du carbure de titane en sortie de la cellule de revêtement 9.

Quatre paramètres ont une influence particulièrement importante sur les caractéristiques physico-chimiques et morphologiques du dépôt de carbure de titane. Il s'agit de la température T de la fibre 1, en particulier du substrat dans la cellule de revêtement 9, c'est-à-dire de sa surface externe, du rapport R = [H₂] / [TiCl₄] vu plus haut, de la hauteur H de la cellule de revêtement 9 et de la vitesse V de défilement de la fibre 1 dans le dispositif de revêtement 15. Afin d'obtenir un dépôt de bonne qualité, et à titre d'exemple, les plages de paramètres suivantes ont été choisies, pour une cellule de revêtement de 300 mm de hauteur et pour la formation d'un revêtement de carbure de titane d'une épaisseur comprise entre 50 et 300 nm, de préférence environ 100 nm, pour un temps de dépôt compris entre 6 et 18 secondes :
- T comprise entre 1080K et 1650K, de préférence entre 1480K et 1530K ;
- R compris entre 14,2 et 59,6 ;
- H comprise entre 50 et 500 mm et
- V comprise entre 1 m/min et 3 m/min.

Incidemment, l'épaisseur du dépôt dépend plus du rapport R que du débit total de la phase gazeuse, d'où l'utilisation d'un faible débit d'hydrogène (ici environ 150 cm³/min).

On obtient ainsi un revêtement de carbure de titane présentant de faibles variations de rugosité en surface, ce qui favorise sa mouillabilité par le titane et donc la possibilité de réaliser l'enduction de la fibre par le titane à des vitesses élevées, le temps nécessaire au mouillage étant faible.

La fibre 1 avec son revêtement d'un composé 4 mouillable par le titane peut alors être enduite de titane, pour former un fil enduit nécessaire à la confection d'un matériau composite à matrice métallique. La fibre 1 recouverte est ainsi amenée à passer dans une charge d'alliage de titane liquide, de préférence conformément au procédé décrit dans le brevet EP 0 931 846. Du fait de son revêtement par un composé mouillable par le matériau de la matrice, ici du carbure de titane mouillable par le titane, la fibre 1 pénètre instantanément dans la charge de métal liquide, de manière globale, et est parfaitement mouillé par le titane, qui l'englobe complètement. Dans le fil enduit obtenu, la fibre 1 est centrée par rapport à la gaine de titane déposée de façon régulière à sa surface. Du fait de la grande mouillabilité du carbure de titane par le titane, l'enduction de la fibre 1 par le titane, non seulement est faite avec une grande régularité, mais encore peut être envisagée à grande vitesse de défilement de la fibre, typiquement 3 m/sec. Cette vitesse était dans l'art antérieur bridé par le temps de formation de la phase intermédiaire, en l'espèce le carbure de titane. On peut ainsi obtenir une gaine épaisse et régulière de métal, nonobstant la température de fusion élevée et la grande réactivité, avec la fibre, du métal, ici un alliage de titane. La fibre 1 est par ailleurs protégée, par le revêtement du composé mouillable 4, contre les agressions chimiques. La mise en oeuvre du procédé peut être faite à bas coût et de manière industrialisable.

Le procédé peut encore être amélioré par une enduction supplémentaire par un composé facilement mouillable par le métal, qui complète l'effet du premier revêtement de composé mouillable. Dans le cas d'espèce ici présenté en relation avec un revêtement de carbure de titane, il est par exemple possible d'ajouter un revêtement d'étain. Ce revêtement peut être obtenu simplement par dépôt par voie liquide.

Le procédé de l'invention a été décrit en relation avec un dépôt chimique réactif dynamique en phase vapeur RCVD, mais il va de soi que tout autre type de dépôt peut être envisagé, notamment un dépôt chimique dynamique en phase vapeur classique.

Par ailleurs, et selon une autre forme de réalisation, le composé mouillable par le titane dont est revêtu la fibre 1 est du di-borure de titane TiB₂.

## Revendications

1. Procédé d'enduction métallique de fibres par voie liquide, dans lequel une fibre, revêtue d'un matériau formant barrière de diffusion avec le métal, est tirée au travers d'un bain de métal liquide pour être enduite par ce dernier, **caractérisé par le fait que**, préalablement au passage de la fibre dans le bain, la fibre est revêtue d'un composé mouillable par le métal.

2. Procédé selon la revendication 1 dans lequel, l'enduction de la fibre par le métal impliquant la formation d'un composé intermédiaire entre le matériau formant barrière et le métal, la fibre est préalablement revêtue du composé intermédiaire.

3. Procédé selon la revendication 1, dans lequel la fibre est une fibre céramique.

4. Procédé selon la revendication 3, dans lequel la fibre est une fibre de carbure de silicium, revêtue d'une couche de pyrocarbone ou carbone formant barrière, et le métal est un alliage de titane.

5. Procédé selon les revendications 2 et 4, dans lequel le composé mouillable par le titane est le carbure de titane.

6. Procédé selon les revendications 2 et 4, dans lequel le composé mouillable par le titane est le di-borure de titane.

7. Procédé selon la revendication 5, dans lequel la fibre est revêtue de carbure de titane par dépôt chimique réactif dynamique en phase vapeur.

8. Procédé selon la revendication 7, dans lequel le dépôt chimique réactif dynamique en phase vapeur est mis en oeuvre grâce à un précurseur de tétrachlorure de titane dans un gaz vecteur d'hydrogène.

9. Procédé selon la revendication 8 dans lequel, pour la formation d'un revêtement de carbure de titane d'une épaisseur comprise entre 50 et 300 nm, de préférence environ 100 nm, le dépôt est mis en oeuvre avec les paramètres suivants :
- la température de la fibre est comprise entre 1080K et 1650K, de préférence entre 1480K et 1530K ;
- le rapport entre la concentration en hydrogène et la concentration en tétrachlorure de titane est compris entre 14,2 et 59,6 et
- la vitesse de défilement de la fibre est comprise entre 1 m/min et 3 m/min.

10. Procédé selon l'une des revendications 1 à 9, comprenant une étape supplémentaire de revêtement par un second composé mouillage avant l'enduction de la fibre par le métal.

11. Procédé selon la revendication 10, dans lequel le second composé est l'étain.

## Patentansprüche

1. Verfahren zur metallischen Beschichtung von Fasern auf flüssigem Wege, wobei eine Faser, die mit einem Material überzogen ist, das eine Diffusionssperre mit dem Metall bildet, durch ein Bad flüssigen Metalls gezogen wird, um mit Letzterem beschichtet zu werden, **dadurch gekennzeichnet, dass** vor dem Durchleiten der Faser durch das Bad die Faser mit einer durch das Metall benetzbaren Verbindung überzogen wird.

2. Verfahren nach Anspruch 1, wobei, indem die Beschichtung der Faser mit dem Metall die Ausbildung einer Zwischenverbindung zwischen dem eine Sperre bildenden Material und dem Metall voraussetzt, die Faser vorab mit der Zwischenverbindung überzogen wird.

3. Verfahren nach Anspruch 1, wobei die Faser eine Keramikfaser ist.

4. Verfahren nach Anspruch 3, wobei die Faser eine Siliciumcarbidfaser ist, die mit einer eine Sperre bildenden Schicht Pyrokohlenstoff oder Kohlenstoff überzogen ist, und das Metall eine Titanlegierung ist.

5. Verfahren nach den Ansprüchen 2 und 4, wobei die durch das Titan benetzbare Verbindung Titancarbid ist.

6. Verfahren nach den Ansprüchen 2 und 4, wobei die durch das Titan benetzbare Verbindung Titandiborid ist.

7. Verfahren nach Anspruch 5, wobei die Faser durch dynamische reaktive chemische Gasphasenabscheidung mit Titancarbid überzogen wird.

8. Verfahren nach Anspruch 7, wobei die dynamische reaktive chemische Gasphasenabscheidung mittels eines Zwischenstoffs von Titantetrachlorid in einem Trägergas für Wasserstoff durchgeführt wird.

9. Verfahren nach Anspruch 8, wobei für die Ausbildung eines Überzugs aus Titancarbid mit einer Dicke zwischen 50 und 300 nm, vorzugsweise ca. 100 nm, die Abscheidung mit den folgenden Parametern durchgeführt wird:
- die Temperatur der Faser beträgt zwischen 1080 K und 1650 K, vorzugsweise zwischen 1480 K und 1530 K;
- das Verhältnis zwischen der Konzentration an Wasserstoff und der Konzentration an Titantetrachlorid beträgt zwischen 14,2 und 59,6, und
- die Durchlaufgeschwindigkeit der Faser beträgt zwischen 1 m/min und 3 m/min.

10. Verfahren nach einem der Ansprüche 1 bis 9, einen zusätzlichen Schritt des Überziehens mit einer zweiten Benetzungsverbindung vor der Beschichtung der Faser mit dem Metall umfassend.

11. Verfahren nach Anspruch 10, wobei die zweite Verbindung Zinn ist.

## Claims

1. Method for metallic coating of fibres by liquid technique, in which a fibre, coated with a material forming a diffusion barrier with the metal, is drawn through a liquid metal bath to be coated therewith, **characterized in that**, prior to the passage of the fibre into the bath, the fibre is coated with a compound wettable by the metal.

2. Method according to Claim 1, in which, since the coating of the fibre by the metal involves the formation of an intermediate compound between the barrier-forming material and the metal, the fibre is precoated with the intermediate compound.

3. Method according to Claim 1, in which the fibre is a ceramic fibre.

4. Method according to Claim 3, in which the fibre is a silicon carbide fibre, coated with a layer of barrier-forming pyrocarbon or carbon, and the metal is a titanium alloy.

5. Method according to Claims 2 and 4, in which the compound wettable by titanium is titanium carbide.

6. Method according to Claims 2 and 4, in which the compound wettable by titanium is titanium diboride.

7. Method according to Claim 5, in which the fibre is coated with titanium carbide by reactive chemical vapour deposition.

8. Method according to Claim 7, in which the reactive chemical vapour deposition is applied using a titanium tetrachloride precursor in a hydrogen carrier gas.

9. Method according to Claim 8, in which, for the formation of a titanium carbide coating between 50 and 300 nm thick, preferably about 100 nm thick, the deposition is carried out with the following parameters:
- the fibre temperature is between 1080 K and 1650K,preferably between 1480 K and 1530 K;
- the ratio of the hydrogen concentration to the titanium tetrachloride concentration is between 14.2 and 59.6 and
- the fibre run speed is between 1 m/min and 3 m/min.

10. Method according to one of Claims 1 to 9, comprising an additional step of coating with a second wetting compound before coating of the fibre by the metal.

11. Method according to Claim 10, in which the second compound is tin.
